# EUROPEAN PATENT SPECIFICATION

(11) **EP 2 194 524 B1**
(45) Date of publication and mention of the grant of the patent: **07.09.2016**
(21) Application number: 09251750.7
(22) Date of filing: 07.07.2009
(51) Int. Cl.: G09G 3/34, G09G 3/36

(54) **Display device and brightness controlling method therefor**
Anzeigevorrichtung und Helligkeitssteuerungsverfahren dafür
Dispositif d'affichage et procédé correspondant de contrôle de la luminosité

(30) Priority: 05.12.2008 KR 20080123382
(43) Date of publication of application: 09.06.2010
(73) Proprietor: MagnaChip Semiconductor Ltd., Cheongju-si Chungcheongbuk-do 361-725 (KR)
(72) Inventor: Choi, Yong-Seok, Cheongju-si, Chungcheongbuk-do 361-725 (KR); Lee, Yong-Sup, Cheongju-si, Chungcheongbuk-do 361-725 (KR)
(74) Representative: Maury, Richard Philip

(56) References cited:
- US-A1- 2004 201 561
- US-A1- 2008 191 996

## Description

### BACKGROUND OF THE INVENTION

### Field of the Invention

The present invention relates to a display device; and, more particularly, to an intelligent display device which has an adaptive backlight brightness control function of controlling the brightness of a backlight according to the gray scale level of an image data displayed by frame unit, and a method for controlling brightness of image in the display device.

### Description of Related Art

Generally, the brightness of a cold cathode fluorescent lamp (CCFL), which is used as a light source in a liquid crystal display (LCD), is inversely proportional to the lifespan thereof. That is, the lifespan of CCFL is reduced when CCFL is driven by a high current applied for increasing brightness, and the brightness of CCFL is reduced in a case where CCFL is driven by a low current applied for increasing lifespan.

However, high brightness and long lifespan are mostly required at the same time in terms of the actual application to products. To this end, a high current is applied to the lamp of a backlight according to a user input in a case where the LCD is driven at a certain level of brightness and then intends to particularly display a screen requiring high brightness, so that an active region for the brightness of a display device is widened.

In a case of the LCD, an amount of a current consumed by a display device is changed according to an image displayed on a screen. For example, in the driving mode of the LCD, the consumption power of a display panel increases as the number of bright pixels increases on a screen in a case of a normally white mode where liquid crystal molecules block an incident light by rearranging in the direction of an electric field upon application of a voltage. Accordingly, a method is generally used which controls the current value of a lamp according to the consumption power of the display panel.

However, such a technology detects a current consumed by the display panel, and must include an additional circuit that changes the current to be suitable for a variable range of the brightness control signal of an inverter driving a backlight. Moreover, since brightness must be controlled at the same brightness level on all screens, a consumption power is much greater than that of a case where brightness must be controlled even on a necessary screen. Furthermore, a (brighter or darker) image different from a desired image is outputted due to the control of brightness, thus deteriorating the quality of the image.

US 2004/201516 describes an image display apparatus and method capable of visually improving a sense of contrast by adjusting contrast and a light source to have correlation.

US 2008/0191996 describes a method and/or apparatus to improve the visual perception of an image displayed on a liquid crystal (LCD) panel.

The invention is defined by the display device of Claim 1 and the method of Claim 3.

Other objects and advantages of the present invention can be understood by the following description and become apparent with reference to the embodiments of the present invention. Also, it is obvious to those skilled in the art to which the present invention pertains that the objects and advantages of the present invention can be realized by the means as claimed and combinations thereof.

### BRIEF DESCRIPTION OF THE DRAWINGS

Fig. 1 is a block diagram of an LCD in accordance with an embodiment of the present invention.
Figs. 2A to 2D show a process of causing the brightness saturation and a method for solving this.
Fig. 3 is a block diagram of an LCD.

### DESCRIPTION OF SPECIFIC EMBODIMENT

The advantages, features and aspects of the invention will become apparent from the following description of the embodiments with reference to the accompanying drawings, which is set forth hereinafter. Moreover, like reference numerals refer to like elements throughout.

In the following description, a second image data means data which is inputted immediately before the input of a first image data. Moreover, a current backlight brightness control value, a current contrast control value and a current backlight driving signal mean values used for controlling the brightness of the first image data. A previous backlight brightness control value, a previous contrast control value and a previous backlight driving signal mean values used for controlling the brightness of the second image data.

### Embodiment

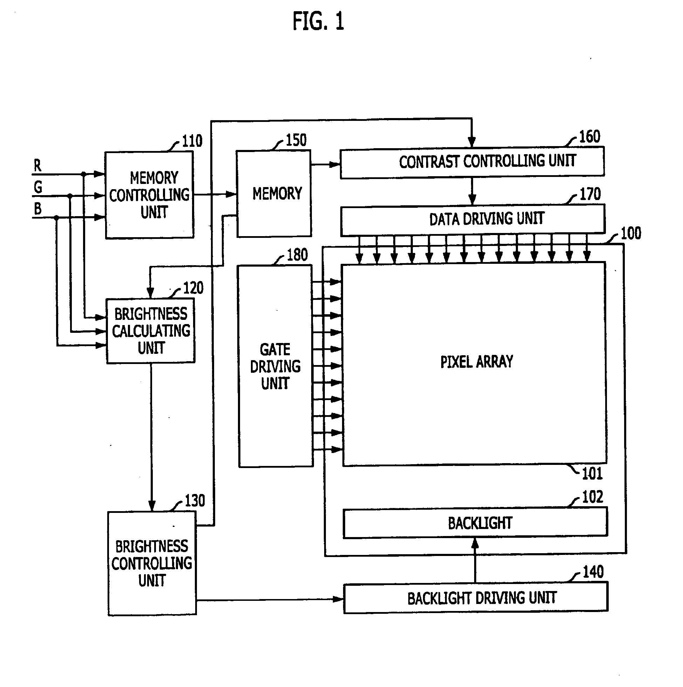

Fig. 1 is a block diagram of an LCD in accordance with an embodiment of the present invention.

Referring to Fig. 1, the LCD in accordance with the embodiment of the present invention includes a display panel 100 including a pixel array 101 and a backlight 102, a data driving unit 170 driving the display panel 100 with a pixel signal, and a gate driving unit 180 driving the display panel 100 with a scanning signal. Moreover, the LCD in accordance with the embodiment of the present invention includes a brightness calculating unit 120, a brightness controlling unit 130, a backlight driving unit 140, and a contrast controlling unit 160.

The brightness calculating unit 120 receives a first image data currently inputted and calculates a first brightness average value. The brightness controlling unit 130 compares the first brightness average value calculated through the brightness calculating unit 120 with a second brightness average value of a second image data which is previously inputted, and controls a current backlight brightness control value and a current contrast control value.

The backlight driving unit 140 controls a current backlight driving signal according to the current backlight brightness control value and provides the controlled signal to the backlight 102. The contrast controlling unit 160 controls the contrast of the first image data according to the current contrast control value and provides it to the data driving unit 170.

Moreover, the LCD in accordance with the embodiment of the present invention further includes a memory 150 receiving an external first image data and an external second image data, and storing the first and second image data sequentially. The memory 150 receives the first and second image data and stores them by frame unit. The memory 150 may store the first and second image data in any one of RGB, YUV, YCoCg and YCbCr types.

Moreover, the LCD in accordance with the embodiment of the present invention further includes a memory controlling unit 110 receiving the first and second image data, and providing them to the memory 150. The memory controlling unit 110 receives the first and second image data and sequentially provides them to the memory 150.

The display panel 100 includes the pixel array 101 and the backlight 102. The pixel array 101 includes the mxn pixel electrodes (where m and n is natural numbers). The pixel electrode includes a liquid crystal and a thin film transistor (TFT) acting as switching element.

The backlight 102 provides a light source to the pixel array 101 according to the backlight driving signal provided from the backlight driving unit 140. The gate driving unit 180 provides the scanning signal (i.e., a gate voltage) to the display panel 100. The data driving unit 170 provides the pixel signal (i.e., a data voltage) to the display panel 100. The pixel electrode in the pixel array 101 is driven according to the scanning signal and the pixel signal, and an image is displayed on the display panel 100 according to the light source irradiated from the backlight 102.

The brightness calculating unit 120 receives the second image data from the memory 150 and the first image data, and calculates the first brightness average value of the first image data and the second brightness average value of the second image data. The first and second brightness average values may be calculated by frame unit.

In a case where the first and second image data are RGB data, the brightness calculating unit 120 converts the RGB data into data including a brightness component and thereafter calculates the first and second brightness average values. At this point, a method of converting into the data including the brightness component uses a color coordinate system. The data including the brightness component may be any one of YUV data, YCoCg data and YCbCr data. The brightness calculating unit 120 may directly receive the second brightness average value from the memory 150.

The brightness controlling unit 130 compares the first brightness average value with the second brightness average value. In a case where the first brightness average value is less than the second brightness average value as the result of the comparison, the brightness controlling unit 130 decreases the current backlight brightness control value to less than the previous backlight brightness control value, and increases the current contrast control value by a brightness level decreased due to the decrease of the current backlight brightness control value.

In a case where the first brightness average value is greater than the second brightness average value as the result of the comparison, the brightness controlling unit 130 increases the current backlight brightness control value to greater than the previous backlight brightness control value, and decreases the current contrast control value by a brightness level increased due to the increase of the current backlight brightness control value.

Moreover, in a case where the level of the first brightness average value is equal to that of the second brightness average value as the result of the comparison, the brightness controlling unit 130 maintains the current backlight brightness control value at the same level as that of the previous backlight brightness control value.

As an example, the following Table 1 shows the control rates of the current backlight brightness control value controlled according to the brightness average value of an input image data and the brightness control stages of an image data.

**Table 1**

| Range of the brightness average value of the image data of an input frame | Control rate of a current backlight brightness control value | Brightness control stage of an image |
|---|---|---|
| 255 - 240 | 100% | No control |
| 239 - 224 | 94% | First stage |
| 223 - 208 | 88% | Second stage |
| 207 - 192 | 82% | Third stage |
| 191 - 176 | 76% | Fourth stage |
| 175 - 158 | 70% | Fifth stage |
| 159 - 144 | 64% | Sixth stage |
| 143 - 128 | 58% | Seventh stage |
| 127 - 112 | 52% | Eighth stage |

In the Table 1, as the brightness control stage of an output image is higher, the output image is made brighter. The brightness average value of an input frame image data is a brightness average value. The LCD calculates the gray scale levels (0 to 255 gray scale levels) of the brightness value of an entire image data, sums the gray scale levels of the brightness value, and obtains the brightness average value which is a value of the summed gray scale level divided by resolution. In the control rate of the current backlight brightness control value, the maximum brightness value is 100%, and the minimum brightness value is 52%. At this point, the control rate is not limited to the Table 1.

The brightness controlling unit 130 controls the current backlight brightness control value and the current contrast control value not to reach the brightness saturation. Generally, in a case that intends to output an image data having a brightness value greater than the brightness average value of an input image data, the brightness saturation can occur when a brightness value is controlled by performing a multiplication operation on a brightness value equal to or greater than a specific value.

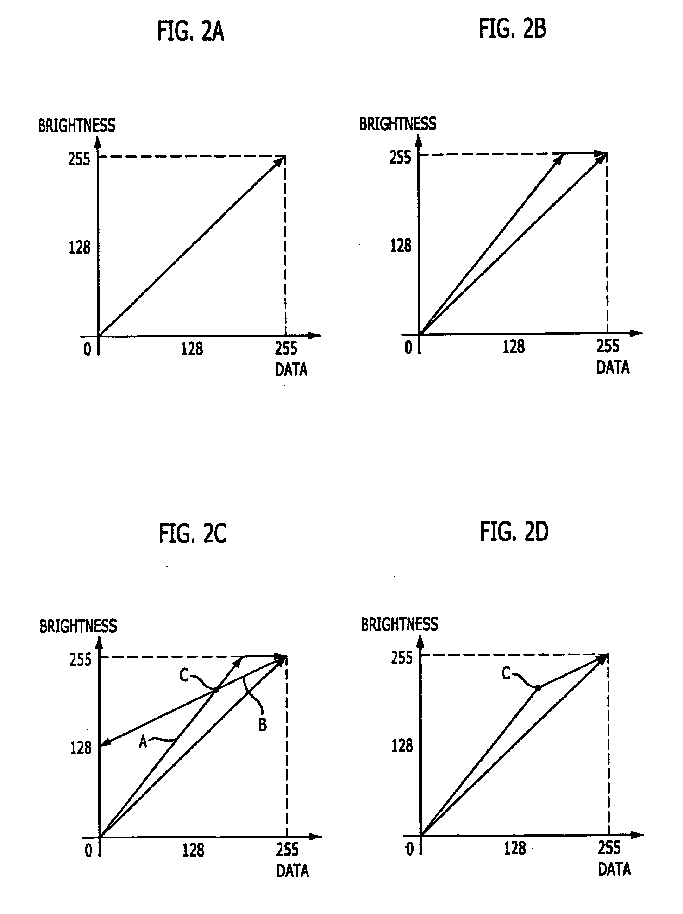

Figs. 2A to 2D show a process of causing the brightness saturation and a method for resolving the problem of saturation of brightness.

Fig. 2A illustrates the brightness value of an image with respect to a general input image data. Fig. 2B is an exemplary diagram illustrating the occurrence of the brightness saturation after a specific input image data when the brightness value of the input image data is controlled.

To prevent the brightness saturation, as illustrated in Figs. 2C and 2D, the LCD can output data having an enhanced brightness value without the brightness saturation by using a half-line A having the brightness average value of '0' (darkest) as a start point and a half-line B having the brightness average value of '255' (brightest) as a start point. That is, the LCD generates two graphs A and B which respectively have the darkest input and the brightest input as a start point, and controls the brightness saturation by using a cross point C at which the generated two graphs intersect with each other.

In a case where the first brightness average value is less than the second brightness average value as the result of the comparison, the backlight driving unit 140 decreases the current backlight driving signal to less than the level of a previous backlight driving signal according to the current backlight brightness control value and provides the decreased current backlight driving signal to the backlight 102. In a case where the first brightness average value is greater than the second brightness average value as the result of the comparison, the backlight driving unit 140 increases the current backlight driving signal to greater than the level of the previous backlight driving signal according to the current backlight brightness control value and provides the increased current backlight driving signal to the backlight 102.

Moreover, in a case where the level of the first brightness average value is equal to that of the second brightness average value as the result of the comparison, the backlight driving unit 140 maintains the current backlight driving signal at the same level as that of the previous backlight driving signal. Herein, the current backlight driving signal and the previous backlight driving signal include a voltage, a current, and a pulse width modulation (PWM) signal.

The contrast controlling unit 160 multiplies the contrast of the first image data by the current contrast control value inputted from the brightness controlling unit 130 to thereby control the contrast level of the first image data. For example, in a case where the first brightness average value is less than the second brightness average value as the result of the comparison, the contrast controlling unit 160 increases the contrast of the first image data according to the current contrast control value. In a case where the first brightness average value is greater than the second brightness average value as the result of the comparison, the contrast controlling unit 160 decreases the contrast of the first image data according to the current contrast control value.

Moreover, in a case where the level of the first brightness average value is equal to that of the second brightness average value as the result of the comparison, the contrast controlling unit 160 maintains the contrast of the first image data at the same contrast level as that of the second image data.

A method for controlling the brightness of an image in an LCD in accordance with the embodiment of the present invention will be described below with reference to Fig. 1.

First, the LCD calculates the first brightness average value of the first image data which is currently inputted. Subsequently, the LCD compares the first brightness average value with the second brightness average value of the second image data which is previously inputted, and controls the current backlight brightness control value and the current contrast control value according to the result of the comparison.

In a case where the first brightness average value is less than the second brightness average value as the result of the comparison, the LCD decreases the current backlight brightness control value to less than the previous backlight brightness control value, and increases the current contrast control value by a brightness level decreased due to the decrease of the current backlight brightness control value.

Moreover, in a case where the first brightness average value is greater than the second brightness average value as the result of the comparison, the LCD increases the current backlight brightness control value to greater than the previous backlight brightness control value, and decreases the current contrast control value by a brightness level increased due to the increase of the current backlight brightness control value.

Moreover, in a case where the level of the first brightness average value is equal to that of the second brightness average value as the result of the comparison, the LCD maintains the current backlight brightness control value at the same level as that of the previous backlight brightness control value.

The LCD controls the level of the current backlight driving signal for the driving control of the backlight 102 according to the current backlight brightness control value. Furthermore, the LCD controls the contrast level of the first image data according to the current contrast control value. The contrast control of the first image data is performed in a method of multiplying the first image data by the current contrast control value.

For example, in a case where the first brightness average value is '210' and the second brightness average value is '230' in the Table 1, the LCD decreases the current backlight brightness control value from the previous backlight brightness control value of 94% to 88%. Furthermore, the LCD increases the current contrast control value in correspondence with the decreased current backlight brightness control value.

At this point, when the contrast of the first image data is multiplied by the current contrast control value, the LCD allows the current contrast control value to be in correspondence with the second stage of the brightness control stage of the image listed in the Table 1. That is, the LCD increases the brightness level of an image from the first stage to the second stage by increasing the current contrast control value, thereby compensating brightness which is decreased in the current backlight brightness control value.

As another example, in a case where the first brightness average value is '193' and the second brightness average value is '159' in the Table 1, the LCD increases the current backlight brightness control value from the previous backlight brightness control value of 70% to 82%. Furthermore, the LCD decreases the current contrast control value in correspondence with the increased current backlight brightness control value.

At this point, the current contrast control value corresponds to the third stage of the brightness control stage of the image listed in the Table 1. That is, the LCD increases the brightness control stage of the image from the fifth stage to the third stage by decreasing the current contrast control value.

As another example, in a case where the first and second brightness average values correspond to the brightness control rate of 100% because the first brightness average value Is '254' and the second brightness average value is '255', the LCD maintains the current backlight brightness control value at the level of the previous backlight brightness control value of 100% as it is. Furthermore, the LCD maintains the current contrast control value at the level of the previous contrast control value at it is, and thus does not control the brightness of an image. That is, the LCD outputs an image having the same brightness level as the second image data.

### Example

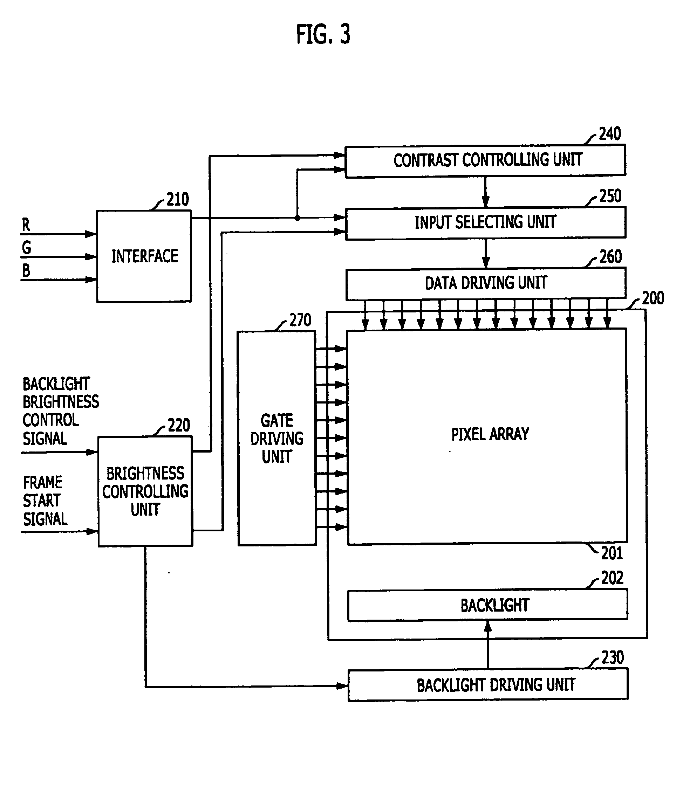

Fig. 3 is a block diagram of an LCD as an example outside the scope of the present invention, for comparison.

Unlike the embodiment, the LCD in accordance with the example controls a current backlight brightness control value and a current contrast control value by using a backlight brightness control signal at each frame start signal in response to an external input frame signal.

In the embodiment, the LCD compares the first brightness average value of the first image data with the second brightness average value of the second image data and controls the current backlight brightness control value and the current contrast control value according to the result of the comparison. In the example of Fig. 3, however, the LCD controls the current backlight brightness control value and the current contrast control value by using the backlight brightness control signal including the brightness information of the current input image data at each frame start signal on the basis of the external input frame signal.

Referring to Fig. 3, like the LCD of Fig. 1, the LCD includes a display panel 200 including a pixel array 201 and a backlight 202, a data driving unit 260 driving the display panel 200 with a pixel signal, and a gate driving unit 270 driving the display panel 200 with a scanning signal. Moreover, the LCD includes an interface 210, a brightness controlling unit 220, a backlight driving unit 230, a contrast controlling unit 240, and an input selecting unit 250,

Herein, the interface 210 receives a current input image data. The brightness controlling unit 220 receives the backlight brightness control signal, and controls the current backlight brightness control value and the current contrast control value by using the backlight brightness control signal at each frame start signal. The backlight driving unit 230 controls a current backlight driving signal according to the current backlight brightness control value and provides the controlled signal to the backlight 202.

The contrast controlling unit 240 controls the contrast of a first image data according to the current contrast control value and provides it to the input selecting unit 250. The input selecting unit 250 outputs any one of image data, which are inputted from the contrast controlling unit 240 and the interface 210, to the data driving unit 260 according to a control signal from the brightness controlling unit 220.

Since the display panel 200, the data driving unit 260 and the gate driving unit 270 are configured with the same structure as those of the LCD in accordance with the embodiment of the present invention, their detailed description will be omitted for conciseness. Hereinafter, the following description will be focused on the brightness controlling unit 220 and the backlight driving unit 230.

In a case where the backlight brightness control signal is a signal that decreases the brightness level of the backlight 202 to less than a previous brightness level, the brightness controlling unit 220 decreases the current backlight brightness control value to less than a previous backlight brightness control value, and increases the level of the current contrast control value by a brightness level decreased due to the decrease of the current backlight brightness control value.

In a case where the backlight brightness control signal is a signal that increases the brightness level of the backlight 202 to greater than the previous brightness level, the brightness controlling unit 220 increases the current backlight brightness control value to greater than the previous backlight brightness control value, and decreases the level of the current contrast control value by a brightness level increased due to the increase of the current backlight brightness control value.

Moreover, in a case where the current backlight brightness control signal is a signal that maintains the brightness level of the backlight 202 at the previous brightness level as it is, the brightness controlling unit 220 maintains the current backlight brightness control value at the same level as that of the previous backlight brightness control value, and maintains the current contrast control value at the same level as that of the previous contrast control value.

Moreover, like the LCD of Fig. 1, the brightness controlling unit 220 generates two graphs by drawing a half-line having a brightness average value being the darkest input as a start point and a half-line having a brightness average value being the brightest input as a start point, and controls the current contrast control value by using the two graphs and a cross point at which the two graphs intersect with each other.

In a case where the backlight brightness control signal is a signal that decreases the brightness level of the backlight 202 to less than the previous brightness level, the brightness driving unit 230 decreases the current backlight driving signal to less than the level of a previous backlight driving signal according to the current backlight brightness control value and provides the decreased signal to the backlight 202. In a case where the backlight brightness control signal is a signal that increases the brightness level of the backlight 202 to greater than the previous brightness level, the backlight driving unit 230 increases the current backlight driving signal to greater than the level of the previous backlight driving signal according to the current backlight brightness control value and provides the increased signal to the backlight 202.

Moreover, in a case where the current backlight brightness control signal is a signal that maintains the brightness level of the backlight 202 at the previous brightness level as it is, the backlight driving unit 230 maintains the current backlight driving signal at the same level as that of the previous backlight driving signal according to the current backlight brightness control value.

The input selecting unit 250 operates according to the control signal inputted from the brightness controlling unit 220, and selects any one of the image data inputted through the contrast controlling unit 240 and the image data inputted through the interface 210 to thereby output the selected image data to the data driving unit 260. For example, in a case where the backlight brightness control signal is a signal that decreases the brightness level of the backlight 202 to less than the previous brightness level or that increases the brightness level of the backlight 202 to greater than the previous brightness level, the input selecting unit 250 selects the image data having contrast controlled through the contrast controlling unit 240 and outputs the selected image data to the data driving unit 260.

On the other hand, in a case where the current backlight brightness control signal is a signal that maintains the brightness level of the backlight 202 at the previous brightness level as it is, the input selecting unit 250 selects the image data inputted through the interface 210 and outputs the selected image data to the data driving unit 260. That is, the input selecting unit 250 outputs the image data, which is inputted without the control of contrast, to the data driving unit 260.

Embodiments of the present invention calculate the brightness average value of an image data composing one frame, compare the calculated brightness average value with the brightness average value of a previous image data, and control the backlight brightness control value and the contrast control value according to a result of the comparison to control the brightness of an image, thereby minimizing the consumption power of the backlight according to an image data to be displayed while enhancing the quality of the image.

While the present invention has been described with respect to the specific embodiments, it will be apparent to those skilled in the art that various changes and modifications may be made without departing from the scope of the invention as defined in the following claims.

The memory may store the first and second image data by frame unit.

The brightness calculating unit may receive the second image data from the memory and calculate the second brightness average value of the second image data by frame unit. The first and second image data are preferably RGB data.

When the inputted first image data are RGB data, the brightness calculating unit preferably converts the RGB data into data comprising a brightness component and calculates the first brightness average value. The data including the brightness component may be any one of YUV data, YCoCg data, and YCbCr data.

The memory may store the first and second image data in any one of RGB, YUV, YCoCg, and YCbCr formats.

The display device may further comprise: a memory controlling unit configured to receive the first and second image data, and provide the received data to the memory.

In the method of Claim 3, when the first brightness average value is less than the second brightness average value as the result of the comparison, the current backlight brightness control value may be decreased to less than a previous backlight brightness control value, and a level of the current contrast control value may be increased by a brightness level decreased due to the decrease of the current backlight brightness control value.

When the first brightness average value is greater than the second brightness average value as the result of the comparison, the current backlight brightness control value may be increased to greater than a previous backlight brightness control value, and a level of the current contrast control value may be decreased by a brightness level increased due to the increase of the current backlight brightness control value.

When the first brightness average value is equal to the second brightness average value as the result of the comparison, the current backlight brightness control value may be maintained at a previous backlight brightness control value.

When the first brightness average value is less than the second brightness average value as the result of the comparison, the current backlight driving signal may be decreased to less than a level of a previous backlight driving signal according to the current backlight brightness control value.

When the first brightness average value is greater than the second brightness average value as the result of the comparison, the current backlight driving signal may be increased to greater than a level of a previous backlight driving signal according to the current backlight brightness control value.

The controlling of the contrast of the first image data may comprise: multiplying the contrast of the first image data by the current contrast control value to control the contrast of the first image data.

The controlling of the current backlight brightness control value and the current contrast control value may comprise: generating two graphs by drawing a first half-line having a first brightness average value being the darkest input as a start point and a second half-line having a second brightness average value being the brightest input as a start point; and controlling the current contrast control value by using the two graphs and a cross point at which the two graphs intersect with each other.

## Claims

1. A display device including a display panel (100) having a pixel array (101) and a backlight (102), a gate driving unit (180) driving the display panel (100) with a scanning signal, and a data driving unit (170) driving the display panel (100) with a pixel signal, the display device comprising:
a memory (150) configured to receive a second image data and then a first image data sequentially;
a brightness calculating unit (120) configured to receive a first image data, which is currently inputted, and to calculate a first brightness average value based on a frame unit of the first image data;
a brightness controlling unit (130) configured to compare the first brightness average value with a second brightness average value based on a frame unit of the second image data, and to control a current backlight control value and a current contrast control value based on the result of the comparison;
a backlight driving unit (140) configured to control a current backlight driving signal according to the current backlight brightness control value, and to provide the controlled signal to the backlight (102); and
a contrast controlling unit (160) configured to control contrast of the first image data according to the current contrast control value, and to provide the controlled data to the data driving unit (170);
wherein when the first brightness average value is less than the second brightness average value as the result of the comparison, the brightness controlling unit(130) decreases the current backlight brightness control value to less than a previous backlight brightness control value, and increases the current contrast control value by a brightness level decreased due to the decrease of the current backlight brightness control value, and the backlight driving unit (140) decreases the current backlight driving signal to less than a level of a previous backlight driving signal according to the current backlight brightness control value, and provides the decreased signal to the backlight (102),
wherein when the first brightness average value is greater than the second brightness average value as the result of the comparison, the brightness controlling unit (130) increases the current backlight brightness control value to greater than a previous backlight brightness control value, and decreases the current contrast control value by a brightness level increased due to the increase of the current backlight brightness control value, and the backlight driving unit (140) increases the current backlight driving signal to greater than a level of a previous backlight driving signal according to the current backlight brightness control value, and provides the increased signal to the backlight,
and wherein when the first brightness average value is equal to the second brightness average value as the result of the comparison, the brightness controlling unit (130) maintains the current backlight brightness control value at a previous backlight brightness control value and the backlight driving unit(140) maintains the current backlight driving signal at the same level as a level of a previous backlight driving signal.

2. The display device of Claim 1, wherein the contrast controlling unit (160) multiplies contrast of the first image data by the current contrast control value to control a contrast level of the first image data.

3. A method for controlling brightness of images for a display device according to claim 1, the method comprising:
calculating a first brightness average value based on a frame unit of a first image data which is currently inputted;
comparing the first brightness average value with a second brightness average value based on a frame unit of a second image data which has been inputted before, and controlling a current backlight brightness control value and a current contrast control value based on the result of the comparison; and
controlling a current backlight driving signal according to the current backlight brightness control value, and controlling contrast of the first image data according to the current contrast control value,
wherein when the first brightness average value is less than the second brightness average value as the result of the comparison, decreasing the current backlight brightness control value to less than a previous backlight brightness control value, and increasing the current contrast control value by a brightness level decreased due to the decrease of the current backlight brightness control value, and decreasing the current backlight driving signal to less than a level of a previous backlight driving signal according to the current backlight brightness control value,
wherein when the first brightness average value is greater than the second brightness average value as the result of the comparison, increasing the current backlight brightness control value to greater than a previous backlight brightness control value, and decreasing the current contrast control value by a brightness level increased due to the increase of the current backlight brightness control value, and increasing the current backlight driving signal to greater than a level of a previous backlight driving signal according to the current backlight brightness control value,
and wherein when the first brightness average value is equal to the second brightness average value as the result of the comparison, maintaining the current backlight brightness control value at a previous backlight brightness control value and the current backlight driving signal at the same level as a level of a previous backlight driving signal.

## Patentansprüche

1. Anzeigevorrichtung, umfassend eine Anzeigetafel (100) mit einem Pixelarray (101) und einer Hintergrundbeleuchtung (102), eine Gate-Antriebseinheit (180), die die Anzeigetafel (100) mit einem Scan-Signal antreibt, und eine Datenantriebseinheit (170), die die Anzeigetafel (100) mit einem Pixelsignal antreibt, wobei die Anzeigevorrichtung Folgendes umfasst:
einen Speicher (150), der zum aufeinanderfolgenden Empfangenen zweiter Bilddaten und anschließend erster Bilddaten konfiguriert ist;
eine Helligkeitsberechnungseinheit (120), die zum Empfangen erster Bilddaten, die aktuell eingegeben werden, und zum Berechnen eines ersten Helligkeitsdurchschnittswerts auf Grundlage einer Frame-Einheit der ersten Bilddaten konfiguriert ist;
eine Helligkeitssteuerungseinheit (130), die zum Vergleichen des ersten Helligkeitsdurchschnittswerts mit einem zweiten Helligkeitsdurchschnittswert auf Grundlage einer Frame-Einheit der zweiten Bilddaten und zum Steuern eines aktuellen Hintergrundbeleuchtungshelligkeitssteuerungswerts und einem aktuellen Kontraststeuerungswert auf Grundlage des Ergebnisses des Vergleichs konfiguriert ist;
eine Hintergrundbeleuchtungsantriebseinheit (140), die zum Steuern eines aktuellen Hintergrundbeleuchtungsantriebssignals entsprechend dem aktuellen Hintergrundbeleuchtungshelligkeitssteuerungswert und zum Bereitstellen des gesteuerten Signals an die Hintergrundbeleuchtung (102) konfiguriert ist; und
eine Kontraststeuerungseinheit (160), die zum Steuern des Kontrastes der ersten Bilddaten entsprechend dem aktuellen Kontraststeuerungswert und zum Bereitstellen der gesteuerten Daten an die Datenantriebseinheit (170) konfiguriert ist;
wobei, wenn als Ergebnis des Vergleichs der erste Helligkeitsdurchschnittswert niedriger als der zweite Helligkeitsdurchschnittswert ist, die Helligkeitssteuerungseinheit (130) den aktuellen Hintergrundbeleuchtungshelligkeitssteuerungswert auf weniger als einen vorherigen Hintergrundbeleuchtungshelligkeitssteuerungswert verringert und den aktuellen Kontraststeuerungswert um ein Helligkeitsniveau, das aufgrund der Verringerung des aktuellen Hintergrundbeleuchtungshelligkeitssteuerungswerts verringert ist, erhöht und die Hintergrundbeleuchtungsantriebseinheit (140) das aktuelle Hintergrundbeleuchtungsantriebssignal auf weniger als ein Niveau eines vorherigen Hintergrundbeleuchtungsantriebssignals entsprechend dem aktuellen Hintergrundbeleuchtungshelligkeitssteuerungswert verringert und das verringerte Signal der Hintergrundbeleuchtung (102) bereitstellt,
wobei, wenn als Ergebnis des Vergleichs der erste Helligkeitsdurchschnittswert höher als der zweite Helligkeitsdurchschnittswert ist, die Helligkeitssteuerungseinheit (130) den aktuellen Hintergrundbeleuchtungshelligkeitssteuerungswert auf mehr als einen vorherigen Hintergrundbeleuchtungshelligkeitssteuerungswert erhöht und den aktuellen Kontraststeuerungswert um ein Helligkeitsniveau, das aufgrund der Erhöhung des aktuellen Hintergrundbeleuchtungshelligkeitssteuerungswerts erhöht ist, verringert und die Hintergrundbeleuchtungsantriebseinheit (140) das aktuelle Hintergrundbeleuchtungsantriebssignal auf mehr als ein Niveau eines vorherigen Hintergrundbeleuchtungsantriebssignals entsprechend dem aktuellen Hintergrundbeleuchtungshelligkeitssteuerungswert erhöht und das erhöhte Signal der Hintergrundbeleuchtung bereitstellt,
und wobei der erste Helligkeitsdurchschnittswert als Ergebnis des Vergleichs gleich dem zweiten Helligkeitsdurchschnittswerts ist, die Helligkeitssteuerungseinheit (130) den aktuellen Hintergrundbeleuchtungshelligkeitssteuerungswert auf einem vorherigen Hintergrundbeleuchtungshelligkeitssteuerungswert hält und die Hintergrundbeleuchtungsantriebseinheit (140) das aktuelle Hintergrundbeleuchtungsantriebssignal auf dem gleichen Niveau hält wie ein Niveau eines vorherigen Hintergrundbeleuchtungsantriebssignals.

2. Anzeigevorrichtung nach Anspruch 1, wobei die Kontraststeuerungseinheit (160) den Kontrast der ersten Bilddaten mit dem aktuellen Kontraststeuerungswert multipliziert, um ein Kontrastniveau der ersten Bilddaten zu steuern.

3. Verfahren zum Steuern der Helligkeit von Bildern für eine Anzeigevorrichtung nach Anspruch 1, wobei das Verfahren Folgendes umfasst:
Berechnen eines ersten Helligkeitsdurchschnittswerts auf Grundlage einer Frame-Einheit erster Bilddaten, die aktuell eingegeben werden;
Vergleichen des ersten Helligkeitsdurchschnittswerts mit einem zweiten Helligkeitsdurchschnittswert auf Grundlage einer Frame-Einheit zweiter Bilddaten, die zuvor eingegeben wurden, und zum Steuern eines aktuellen Hintergrundbeleuchtungshelligkeitssteuerungswerts und eines aktuellen Kontraststeuerungswerts auf Grundlage des Ergebnisses des Vergleichs; und
Steuern eines aktuellen Hintergrundbeleuchtungsantriebssignals entsprechend dem aktuellen Hintergrundbeleuchtungshelligkeitssteuerungswert und Steuern des Kontrasts der ersten Bilddaten entsprechend dem aktuellen Kontraststeuerungswert,
wobei, wenn als Ergebnis des Vergleichs der erste Helligkeitsdurchschnittswert niedriger als der zweite Helligkeitsdurchschnittswert ist, der aktuelle Hintergrundbeleuchtungshelligkeitssteuerungswert auf weniger als einen vorherigen Hintergrundbeleuchtungshelligkeitssteuerungswert verringert wird und der aktuelle Kontraststeuerungswert um ein Helligkeitsniveau, das aufgrund der Verringerung des aktuellen Hintergrundbeleuchtungshelligkeitssteuerungswerts verringert ist, erhöht wird und das aktuelle Hintergrundbeleuchtungsantriebssignal auf weniger als ein Niveau eines vorherigen Hintergrundbeleuchtungsantriebssignals entsprechend dem aktuellen Hintergrundbeleuchtungshelligkeitssteuerungswert verringert wird,
wobei, wenn als Ergebnis des Vergleichs der erste Helligkeitsdurchschnittswert größer als der zweite Helligkeitsdurchschnittswert ist, der aktuelle Hintergrundbeleuchtungshelligkeitssteuerungswert auf mehr als einen vorherigen Hintergrundbeleuchtungshelligkeitssteuerungswert erhöht wird und der aktuelle Kontraststeuerungswert um ein Helligkeitsniveau, das aufgrund der Erhöhung des aktuellen Hintergrundbeleuchtungshelligkeitssteuerungswerts erhöht ist, verringert wird und das aktuelle Hintergrundbeleuchtungsantriebssignal auf weniger als ein Niveau eines vorherigen Hintergrundbeleuchtungsantriebssignals entsprechend dem aktuellen Hintergrundbeleuchtungshelligkeitssteuerungswert erhöht wird,
und wobei der erste Helligkeitsdurchschnittswert als Ergebnis des Vergleichs gleich dem zweiten Helligkeitsdurchschnittswerts ist, der aktuelle Hintergrundbeleuchtungshelligkeitssteuerungswert auf einem vorherigen Hintergrundbeleuchtungshelligkeitssteuerungswert gehalten wird und das aktuelle Hintergrundbeleuchtungsantriebssignal auf dem gleichen Niveau gehalten wird wie ein Niveau eines vorherigen Hintergrundbeleuchtungsantriebssignals.

## Revendications

1. Dispositif d'affichage comprenant un panneau d'affichage (100) présentant un réseau de pixels (101) et un rétroéclairage (102), une unité de pilotage de grille (180) pilotant le panneau d'affichage (100) avec un signal de balayage, et une unité de pilotage de données (170) pilotant le panneau d'affichage (100) avec un signal de pixel, le dispositif d'affichage comprenant :
une mémoire (150) configurée pour recevoir des deuxièmes données d'image et ensuite des premières données d'image de manière séquentielle ;
une unité de calcul de luminosité (120) configurée pour recevoir des premières données d'image, qui sont en cours d'entrée, et pour calculer une première valeur moyenne de luminosité en se basant sur une unité de trame des premières données d'image ;
une unité de commande de luminosité (130) configurée pour comparer la première valeur moyenne de luminosité avec une deuxième valeur moyenne de luminosité en se basant sur une unité de trame des deuxièmes données d'image, et pour commander une valeur de commande de luminosité de rétroéclairage actuelle et une valeur de commande de contraste actuelle en se basant sur le résultat de ladite comparaison ;
une unité de pilotage de rétroéclairage (140) configurée pour commander un signal de pilotage de rétroéclairage actuel en fonction de la valeur de commande de luminosité de rétroéclairage actuelle, et pour fournir le signal commandé au rétroéclairage (102) ; et
une unité de commande de contraste (160) configurée pour commander un contraste des premières données d'image en fonction de la valeur de commande de contraste actuelle, et pour fournir les données commandées à l'unité de pilotage de données (170) ;
dans lequel, lorsque le résultat de la comparaison est que la première valeur moyenne de luminosité est inférieure à la deuxième valeur moyenne de luminosité, l'unité de commande de luminosité (130) diminue la valeur de commande de luminosité de rétroéclairage actuelle pour qu'elle soit inférieure à une valeur de commande de luminosité de rétroéclairage précédente, et augmente la valeur de commande de contraste actuelle relativement à un niveau de luminosité diminué en raison de la diminution de la valeur de commande de luminosité de rétroéclairage actuelle, et l'unité de pilotage de rétroéclairage (140) diminue le signal de pilotage de rétroéclairage actuel pour qu'il soit inférieur à un niveau d'un signal de pilotage de rétroéclairage précédent en fonction de la valeur de commande de luminosité de rétroéclairage actuelle, et fournit le signal diminué au rétroéclairage (102),
dans lequel, lorsque le résultat de la comparaison est que la première valeur moyenne de luminosité est supérieure à la deuxième valeur moyenne de luminosité, l'unité de commande de luminosité (130) augmente la valeur de commande de luminosité de rétroéclairage actuelle pour qu'elle soit supérieure à une valeur de commande de luminosité de rétroéclairage précédente, et diminue la valeur de commande de contraste actuelle relativement à un niveau de luminosité augmenté en raison de l'augmentation de la valeur de commande de luminosité de rétroéclairage actuelle, et l'unité de pilotage de rétroéclairage (140) augmente le signal de pilotage de rétroéclairage actuel pour qu'il soit supérieur à un niveau d'un signal de pilotage de rétroéclairage précédent en fonction de la valeur de commande de luminosité de rétroéclairage actuelle, et fournit le signal augmenté au rétroéclairage,
et dans lequel, lorsque le résultat de la comparaison est que la première valeur moyenne de luminosité est égale à la deuxième valeur moyenne de luminosité, l'unité de commande de luminosité (130) maintient la valeur de commande de luminosité de rétroéclairage actuelle à une valeur de commande de luminosité de rétroéclairage précédente et l'unité de pilotage de rétroéclairage (140) maintient le signal de pilotage de rétroéclairage actuel au même niveau qu'un niveau d'un signal de pilotage de rétroéclairage précédent.

2. Dispositif d'affichage selon la revendication 1, dans lequel l'unité de commande de contraste (160) multiplie un contraste des premières données d'image par la valeur de commande de contraste actuelle afin de commander un niveau de contraste des premières données d'image.

3. Procédé permettant de commander une luminosité d'images pour un dispositif d'affichage selon la revendication 1, le procédé comprenant les étapes consistant à :
calculer une première valeur moyenne de luminosité en se basant sur l'unité de trame de premières données d'image qui sont en cours d'entrée ;
comparer la première valeur moyenne de luminosité avec une deuxième valeur moyenne de luminosité en se basant sur une unité de trame de deuxièmes données d'image qui ont été entrées auparavant, et commander une valeur de commande de luminosité de rétroéclairage actuelle et une valeur de commande de contraste actuelle en se basant sur le résultat de ladite comparaison ; et
commander un signal de pilotage de rétroéclairage actuel en fonction de la valeur de commande de luminosité de rétroéclairage actuelle, et commander un contraste des premières données d'image en fonction de la valeur de commande de contraste actuelle,
dans lequel, lorsque le résultat de la comparaison est que la première valeur moyenne de luminosité est inférieure à la deuxième valeur moyenne de luminosité, on diminue la valeur de commande de luminosité de rétroéclairage actuelle pour qu'elle soit inférieure à une valeur de commande de luminosité de rétroéclairage précédente, et d'augmenter la valeur de commande de contraste actuelle relativement à un niveau de luminosité diminué en raison de la diminution de la valeur de commande de luminosité de rétroéclairage actuelle, et de diminuer le signal de pilotage de rétroéclairage actuel pour qu'il soit inférieur à un niveau d'un signal de pilotage de rétroéclairage précédent en fonction de la valeur de commande de luminosité de rétroéclairage actuelle,
dans lequel, lorsque le résultat de la comparaison est que la première valeur moyenne de luminosité est supérieure à la deuxième valeur moyenne de luminosité, il convient d'augmenter la valeur de commande de luminosité de rétroéclairage actuelle afin qu'elle soit supérieure à une valeur de commande de luminosité de rétroéclairage précédente, et de diminuer la valeur de commande de contraste actuelle relativement à un niveau de luminosité augmenté en raison de l'augmentation de la valeur de commande de luminosité de rétroéclairage actuelle, et d'augmenter le signal de pilotage de rétroéclairage actuel pour qu'il soit supérieur à un niveau d'un signal de pilotage de rétroéclairage précédent en fonction de la valeur de commande de luminosité de rétroéclairage actuelle,
et dans lequel, lorsque le résultat de la comparaison est que la première valeur moyenne de luminosité est égale à la deuxième valeur moyenne de luminosité, il convient de maintenir la valeur de commande de luminosité de rétroéclairage actuelle à une valeur de commande de luminosité de rétroéclairage précédente et de maintenir le signal de pilotage de rétroéclairage actuel au même niveau qu'un niveau d'un signal de pilotage de rétroéclairage précédent.
